Europäisches Patentamt

European Patent Office

Office européen des brevets

(11) Veröffentlichungsnummer: **0 417 412 A2**

(12) # EUROPÄISCHE PATENTANMELDUNG

(21) Anmeldenummer: 90112319.0

(51) Int. Cl.5: **F01N 3/20**

(22) Anmeldetag: **28.06.90**

(30) Priorität: **12.09.89 DE 3930380**

(43) Veröffentlichungstag der Anmeldung:
**20.03.91 Patentblatt 91/12**

(84) Benannte Vertragsstaaten:
**DE FR GB IT NL SE**

(71) Anmelder: **Dr.Ing.h.c. F. Porsche**
**Aktiengesellschaft**
**Porschestrasse 42**
**W-7000 Stuttgart 40(DE)**

(72) Erfinder: **Gruden, Dusan, Prof. Dipl.-Ing.**
**Aspergstrasse 10**
**W-7257 Ditzingen(DE)**
Erfinder: **Rutschmann, Erwin, Dipl.-Ing.**
**Schönblickstrasse 21**
**W-7533 Tiefenbronn(DE)**

(54) **Abgasanlage eines Mehrzylinder-Verbrennungsmotors.**

(57) Um die Abgasemission von Motoren (1) durch ein früheres Ansprechen der Katalysatoren zu reduzieren, wird in jede von Zylinderkopf ausgehende Abgasleitung (2, 3, 4, 5) ein Startkatalysator (6) eingesetzt. Die Startkatalysatoren (6) werden durch Öffnen von Bypasskanälen (8) unwirksam, sobald der ihnen nachgeschaltete Hauptkatalysator (16) eine ausreichende Betriebstemperatur hat.

FIG.3

EP 0 417 412 A2

# ABGASANLAGE EINES MEHRZYLINDER-VERBRENNUNGSMOTORS

Die Erfindung betrifft eine Abgasanlage eines Mehrzylinder-Verbrennungsmotors nach dem Oberbegriff des Anspruchs 1.

Aus der **US-PS 3,297,400** ist es bekannt, in einer Abgasanlage einen kleineren und einen größeren Katalysator parallel zu schalten. Während der Warmlaufphase des Motors strömen die Abgase zunächst durch den kleineren Katalysator und bringen ihne auf eine für die Reaktion nötige Betriebstemperatur. Der kleinere Katalysator wird deshalb als Startkatalysator bezeichnet. Um eine Überhitzung des Startkatalysators zu vermeiden, werden die Abgase durch den großen Katalysator geleitet, sobald dieser seine für die Abgasreinigung nötige Betriebstemperatur erreicht hat.

Mit steigendem Umweltbewußtsein und entsprechend verschärften Abgasvorschriften müssen Lösungen für eine noch bessere Abgasreinigung der Kraftfahrzeugmotoren gefunden werden. Es ist die Aufgabe der Erfindung, eine Abgasanlage zu konzipieren, mit der die Abgasemission von Motoren durch ein früheres Ansprechen der Katalysatoren reduziert wird.

Zur Lösung dieser Aufgabe dienen die kennzeichnenden Merkmale des Anspruchs 1. Wenn in jede von einem Motorzylinder kommende Abgasleitung ein Startkatalysator eingesetzt ist, dessen für die Abgasreinigung wirksamer Querschnitt in etwa dem Rohrquerschnitt der Abgasleitung entspricht, wird der für die Abgasreinigung zur Verfügung stehende Gesamtquerschnitt deutlich höher als bei den heute üblichen mit Katalysatoren ausgerüsteten Motoren. Wegen ihres kleineren Volumens und der Anordnung in Motornähe erreichen diese Startkatalysatoren sehr rasch ihre Reaktionstemperatur.

In einer bevorzugten Ausführungsform der Erfindung nach Anspruch 5 weisen die Startkatalysatoren einen durch eine Drehklappe verschließbaren Zentralkanal und einen ihn umgebenden, das Katalysatormaterial enthaltenden Ringkanal auf. In der Warmlaufphase des Motors wird der Ringkanal verschlossen; das gesamte Abgas strömt durch die mit Katalysatormaterial gefüllten Ringkanäle. Wenn nach Ende der Warmlaufphase die Zentralkanäle geöffnet werden, strömt nur noch ein so geringer Teil des Abgases durch die Ringkanäle, daß keine Überhitzung des Katalysatormaterials zu befürchten ist.

Zwei Ausführungsbeispiele der Erfindung werden schematisch in den Zeichnungen dargestellt. Es zeigen

Fig. 1 eine Abgasanlage eines Reihenmotors,

Fig. 2 einen Startkatalysator, vergrößert dargestellt,

Fig. 3 eine Abgasanlage eines Boxermotors.

Vom Zylinderkopf 1 eines Vierzylinder-Reihenmotors gehen vier Abgasleitungen 2, 3, 4, 5 aus. An sie sind vier gleich große Startkatalysatoren 6 angeschlossen, die jeweils einen kreisförmigen, durch eine Drehklappe 7 verschließbaren Zentralkanal 8 und einen ihn konzentrisch umgebenden, mit Katalysatormaterial 9 gefüllten Ringkanal 10 aufweisen. Ein den Startkatalysator 6 einhüllendes Mantelrohr besteht aus einem sich in Strömungsrichtung erweiternden Zulaufteil 11, einem zylindrischen Mantelteil 12 und einem sich daran anschließenden konisch sich verjüngenden Endstück 13. Die Startkatalysatoren sind über ein Mündungsstück 14 an ein gemeinsames Abgasrohr 15 angeschlossen, das einen Hauptkatalysator 16 enthält. An der Einmündungsstelle zu dem Abgasrohr 16 ist eine Lambda-Sonde 17 angeordnet. Die Drehklappen 7 sind mittels eines Gestänges 18 und eines Stellmotors 19 gemeinsam betätigbar.

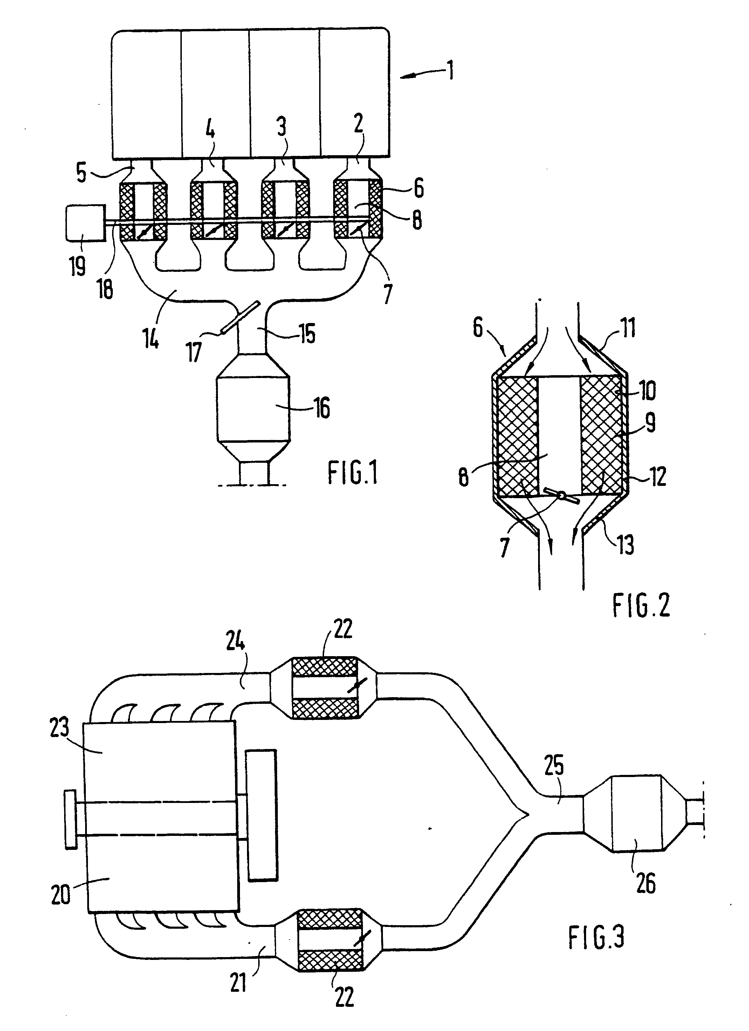

Nach Fig. 2 geht von der einen Zylinderreihe 20 eines Boxermotors eine gemeinsame Abgasleitung 21 aus; in sie ist ein Startkatalysator 22 eingesetzt. Von der anderen Zylinderreihe 23 geht eine Abgasleitung 24 aus, die einen gleichen Startkatalysator 22 enthält. Die Abgasleitungen 21 und 24 münden in ein gemeinsames Abgasrohr 25, in dem ein Hauptkatalysator 26 eingesetzt ist.

## Ansprüche

1. Abgasanlage eines Mehrzylinder-Verbrennungsmotors, dessen Abgase einen Hauptkatalysator und einen während der Warmlaufphase des Motors wirksamen kleinvolumigen Startkatalysator durchströmen, **dadurch gekennzeichnet**, daß in alle von dem Zylinderkopf (1) ausgehenden Abgasleitungen (2, 3, 4, 5) in Motornähe Startkatalysatoren (6) eingesetzt sind und daß dieAbgasleitungen (2, 3, 4, 5) in ein Abgasrohr (15) einmünden, das einen Hauptkatalysator (16) enthält.

2. Abgasanlage eines Mehrzylinder-Verbrennungsmotors, dessen Abgase einen Hauptkatalysator und einen während der Warmlaufphase des Motors wirksamen, kleinvolumigen Startkatalysator durchströmen, **dadurch gekennzeichnet**, daß in beide von den Zylinderreihen (20, 23) ausgehende Abgasleitungen (21, 24) in Motornähe Startkatalysatoren (22) eingesetzt sind und daß die Abgas leitungen (21, 24) in ein Abgasrohr (25) einmünden, das einen Hauptkatalysator (26) enthält.

3. Abgasanlage nach Anspruch 1, **dadurch gekennzeichnet**, daß die Startkatalysatoren (6) außen an den Zylinderkopf (1) des Verbrennungsmotors angeflanscht sind.

4. Abgasanlage nach Anspruch 1, **dadurch gekennzeichnet**, daß die Startkatalysatoren (6) in Abgaskanäle des Zylinderkopfs (1) integriert sind.

5. Abgasanlage nach einem der Ansprüche 1 bis 4, **dadurch gekennzeichnet**, daß die Startkatalysatoren (6, 22) einen verschließbaren Zentralkanal (8) und einen ihn umgebenden, das Katalysatormaterial (9) enthaltenden Ringkanal (10) aufweisen.

6. Abgasanlage nach Anspruch 5, **dadurch gekennzeichnet**, daß der Zentralkanal (8)durch eine Drehklappe (7) verschließbar ist.

7. Abgasanlage nach Anspruch 5, **dadurch gekennzeichnet**, daß der Ringkanal (10) zwei oder mehrere, über den Umfang gleichmäßig verteilte Katalysatoreinsätze enthält.

8. Abgasanlage nach Anspruch 5 und 6, **dadurch gekennzeichnet**, daß die Drehklappen (7) aller Startkatalysatoren (6) durch eine gemeinsame Stelleinrichtung (18, 19) in Abhängigkeit von Motorkenngrößen betätigbar sind.

9. Abgasanlage nach Anspruch 5 und 6, **dadurch gekennzeichnet**, daß die Drehklappen (7) durch die Temperatur der Abgase, vorzugsweise mittels eines Bimetalls, steuerbar sind.

10. Abgasanlage nach Anspruch 5, **dadurch gekennzeichnet**, daß der Zentralkanal (8) einen Kreisquerschnitt aufweist und daß der Ringkanal (10) konzentrisch zu ihm liegt, wobei der Durchmesser des Zentralkanals (8) etwa gleich dem Innendurchmesser der Abgasleitungen (2, 3, 4, 5 bzw. 21, 24), der Außendurchmesser des Ringkanals etwa doppelt so groß ist.

FIG.1

FIG.2

FIG.3